# EUROPEAN PATENT SPECIFICATION

(11) **EP 4 357 786 B1**
(45) Date of publication and mention of the grant of the patent: **28.05.2025**
(21) Application number: 23165098.7
(22) Date of filing: 29.03.2023
(51) Int. Cl.: G01N 35/00, B65G 1/127, G01N 35/04

(54) **VERTICAL TRANSMISSION EQUIPMENT**
VERTIKALÜBERTRAGUNGSEINRICHTUNG
ÉQUIPEMENT DE TRANSMISSION VERTICALE

(30) Priority: 19.10.2022 TW 111139562; 19.10.2022 TW 111139564
(43) Date of publication of application: 24.04.2024
(73) Proprietor: Wistron Corporation, New Taipei City 22181 (TW)
(72) Inventor: WENG, CHI-NENG, New Taipei City (TW); SUNG, Chen-An, New Taipei City (TW); LI, Chuan-Sheng, New Taipei City (TW)
(74) Representative: dompatent von Kreisler Selting Werner - Partnerschaft von Patent- und Rechtsanwälten mbB

(56) References cited:
- WO-A1-2007/071988
- WO-A1-2018/210088
- WO-A2-2009/145742
- DE-A1- 10 141 074
- US-A- 5 738 225
- US-A1- 2008 213 080
- US-A1- 2011 200 419

## Description

### Technical Field

The disclosure relates to a transfer equipment, more particularly relates to a vertical transmission equipment.

### Background

On the conventional equipment for extraction, purification, and sample preparation, the well plate is supported and carried by a horizontally rotating platform. However, the horizontally rotating platform takes up horizontal space and therefore is unfavorable for increasing the number of equipment in a laboratory constrained by limited space.
US2011/0200419A1 discloses a shuttle-type conveying system to convey an article.
US2008/0213080A1 discloses a compact storage system and a corresponding method for storing frozen specimens.
US 5,738,225A discloses a device in which a bookrack moves vertically and horizontally.
DE101 41 074A1 discloses a paternostic goods storage system, comprises goods supports which can be moved up and down along and horizontally between vertical conveyors.
WO2009/145742A2 discloses a stand/rack system with movement mechanism.
WO2007/071988A1 discloses a storage system.
WO2018/210088A1 discloses a warehouse-out and warehouse-in device.

### SUMMARY

Accordingly, one aspect of the disclosure is to provide a vertical transmission equipment capable of solving the problem due to conventional equipment. The invention is set out in the appended set of claims.

One embodiment of the disclosure provides a vertical transmission equipment including a base having a mount surface, a rail structure disposed on the mount surface, and a carrier movably disposed on the rail structure, the carrier comprises a supporting surface, and the supporting surface of the carrier is perpendicular to the mount surface of the base.

One embodiment of the disclosure provides a vertical transmission equipment including a base, a rail structure disposed on the base, and a carrier movably disposed on the rail structure, the carrier has a supporting surface, and the supporting surface of the carrier and the rail structure do not overlap with each other in a normal line of the supporting surface.

One embodiment of the disclosure provides a vertical transmission equipment including a base and a carrier comprising a supporting surface and movably disposed on the base along a transmission path, the supporting surface of the carrier is perpendicular to an imaginary plane which is defined by the transmission path of the carrier.

According to the vertical transmission equipments as discussed in the above embodiments of the disclosure, the supporting surface of the carrier is perpendicular to the mount surface of the base, the supporting surface does not overlap with the rail structure in the normal line of the supporting surface, or the supporting surface of the carrier is perpendicular to the imaginary plane which is defined by the transmission path of the carrier, thus the supporting surface of the carrier is kept in an angle perpendicular to the base and the rail structure. In other words, the vertical transmission equipment achieves a well plate carrier capable of movable in vertical manner, which makes the vertical transmission equipment take lesser horizontal space and therefore is favorable for increasing the number of equipments in a laboratory constrained by limited space.

### BRIEF DESCRIPTION OF THE DRAWINGS

The present disclosure will become better understood from the detailed description given hereinbelow and the accompanying drawings which are given by way of illustration only and thus are not intending to limit the present disclosure and wherein:
FIG. 1 is a perspective view of a vertical transmission equipment according to one embodiment of the disclosure;
FIGS. 2-3 are partial perspective views of a vertical transmission equipment according to one embodiment of the disclosure taken from different view angles;
FIG. 4 is a partially-enlarged view of a vertical transmission equipment according to one embodiment of the disclosure;
FIG. 5 is a partially enlarged view of the transmission component of a vertical transmission equipment according to one embodiment of the disclosure;
FIGS. 6-7 are partially-enlarged cross-sectional views of a vertical transmission equipment according to one embodiment of the disclosure taken from different view angles;
FIG. 8 is a partially-enlarged cross-sectional view of a vertical transmission equipment according to one embodiment of the disclosure when the carrier is positioned by the positioning assembly;
FIG. 9 is a partially-enlarged view of a vertical transmission equipment according to one embodiment of the disclosure;
FIG. 10 is a partially-enlarged view of a vertical transmission equipment according to one embodiment of the disclosure when the carrier moves along the transmission path and just touches the positioning assembly;
FIGS. 11-12 are partially-enlarged views of a vertical transmission equipment according to one embodiment of the disclosure, taken from different view angles, when the carrier is positioned by the positioning assembly;
FIG. 13 is a partially-enlarged view of a vertical transmission equipment according to one embodiment of the disclosure;
FIG. 14 is a top view of a positioning assembly according to one embodiment of the disclosure; and
FIG. 15 depicts the operation of a positioning assembly according to one embodiment of the disclosure.

### DETAILED DESCRIPTION

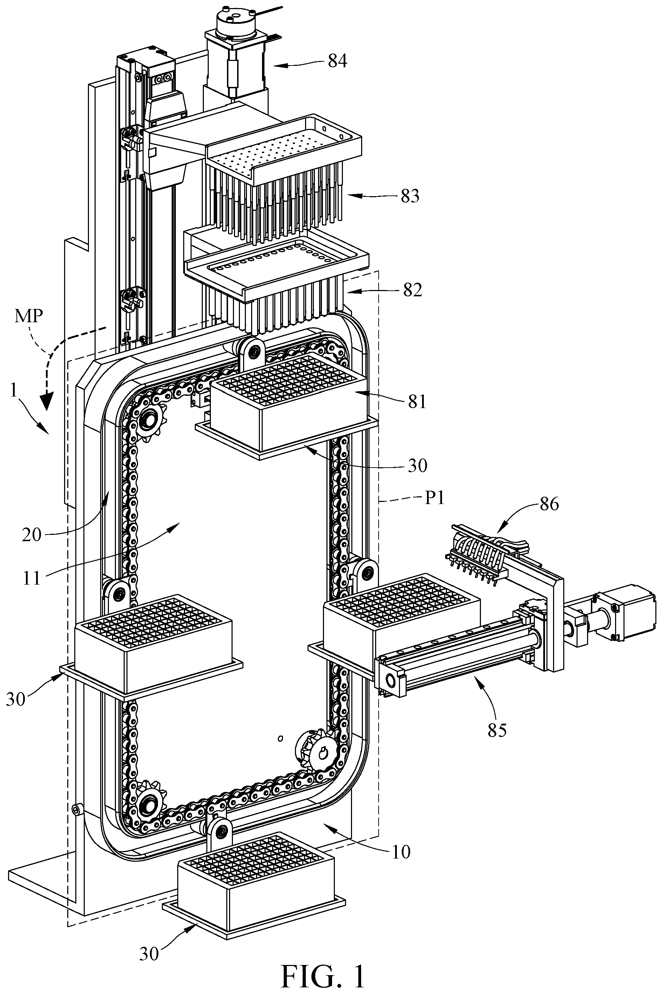

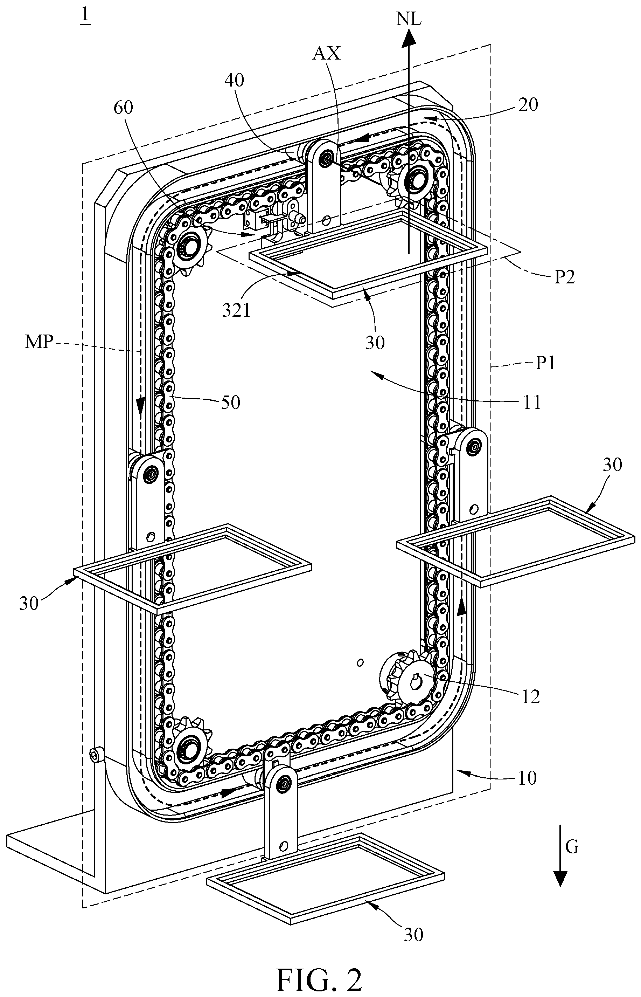

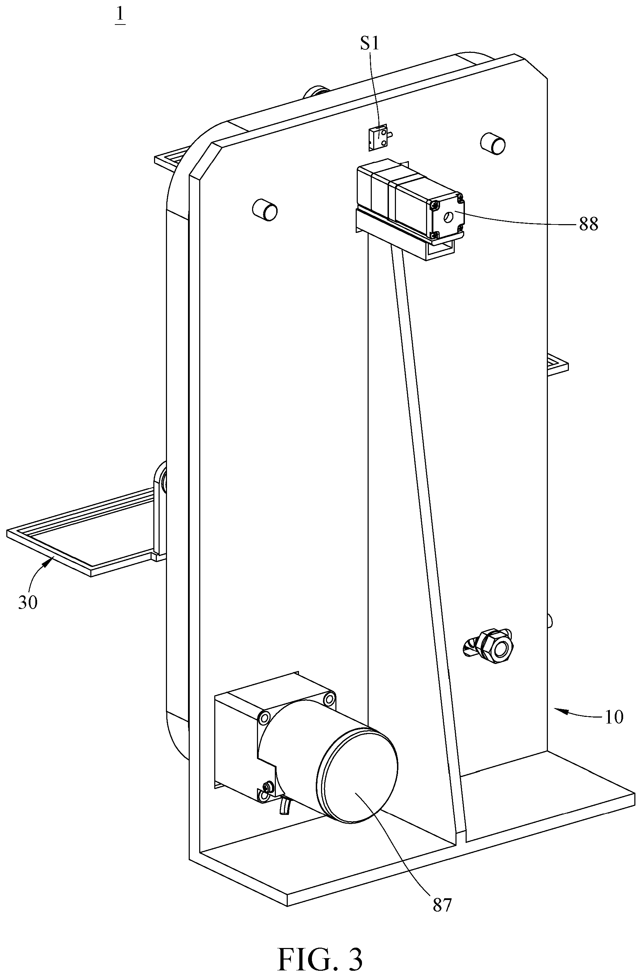

Firstly, referring to FIGS. 1-3, one embodiment of the disclosure provides a vertical transmission equipment **1,** the vertical transmission equipment **1** may include a base **10,** a rail structure **20** and a carrier **30.** The rail structure **20** is disposed on the base **10.** As shown, the base **10** may have a mount surface **11,** the mount surface **11** means the surface of the base **10** in which the rail structure **20** is located. The carrier **30** is movably disposed on the rail structure **20** and therefore the carrier **30** is movable along a transmission path **MP** on the rail structure **20** relative to the base **10.** In other words, the rail structure **20** defines the transmission path **MP** for the carrier **30** to move relatively to the base **10.** In this embodiment, the rail structure **20** may be a closed loop rail in a required shape, thus, as shown, the transmission path **MP** of the carrier **30** may be a closed loop on an imaginary plane **P1.** Note that imaginary plane **P1** is defined by the transmission path **MP.** As such, the carrier **30** is able to be repeatedly moved to different areas of the base **10** along the transmission path **MP.**

The carrier **30** may include a supporting surface **321,** the supporting surface **321** may be a flat surface of the carrier **30** configured for supporting a well plate **81;** in other words, the supporting surface **321** means a surface of the carrier **30** that is used to support the well plate **81.** An imaginary plane **P2** in which the supporting surface **321** is located is perpendicular to the imaginary plane **P1** which is defined by the transmission path **MP.** Note that the imaginary plane **P2** is defined by the supporting surface **321.** In other words, the supporting surface **321** of the carrier **30** may be perpendicular to the mount surface **11** of the base **10** and the rail structure **20.** Thus, in the normal line of the supporting surface **321** (i.e., a normal line **NL** of the imaginary plane **P2**), the supporting surface **321** of the carrier **30** does not overlap with the rail structure **20** and the mount surface **11** of the base **10**, such that the supporting surface **321** of the carrier **30** is kept at an angle perpendicular to the base **10** and the rail structure **20** when moving. As such, the vertical transmission equipment **1** takes up lesser horizontal or lateral space and therefore is favorable for increasing the number of vertical transmission equipments in a limited space.

The well plate **81** may be any suitable multiwell plate with multiple sample wells used as small test tubes. For example, the well plate **81** may have 96, lesser, or more sample wells arranged in a matrix. The well plate **81** may be movable relative to the base **10** along the transmission path **MP** by being carried by the carrier **30.** Note that the number of the carrier **30** that the base **10** can support may be modified as required and not intended to limit the disclosure. It is also noted that the well plate that the carrier **30** can support is merely provided for better understanding the disclosure but is not intended to limit the disclosure.

In this embodiment, the vertical transmission equipment **1** may further include a roller member **40.** The roller member **40** is movably disposed on the rail structure **20** and therefore is only allowed to be movable along the transmission path **MP** relative to the base **10.** The carrier **30** is pivotally connected to the roller member **40** about an axis **AX.** Thus, the carrier **30** is movable along the transmission path **MP** and is rotatable about the axis **AX** relative to the base **10** and the rail structure **20.**

Since the carrier **30** is pivotally connected to the roller member **40,** the gravitational force can naturally correct the carrier **30** to a position that makes the normal line **NL** of its supporting surface **321** parallel to the direction of gravity **G;** in other words, when the rail structure **20** is placed in vertical manner, the supporting surface **321** of the carrier **30** may be self-positioned to be horizontal manner by gravitational force, thereby automatically correcting the angle of the well plate **81** to be horizontal during the movement of the carrier **30** relative to the base **10.**

Optionally, the vertical transmission equipment **1** may be cooperated with a sleeve set **82,** a magnetic rod set **83,** and a lifting mechanism **84.** The lifting mechanism **84** may be disposed on the base **10.** The sleeve set **82** and magnetic rod set **83** may be connected to different rails of the lifting mechanism **84** and therefore can be moved in vertical direction separately. When the carrier **30** moves the well plate **81** to be under the sleeve set **82** and the magnetic rod set **83,** the lifting mechanism **84** may move the sleeve set **82** and magnetic rod set **83** into the wells of the well plate **81** in the required order, the lifting mechanism **84** then can cause the sleeve set **82** and magnetic rod set **83** to vibrate in a predetermined manner so as to perform the required process to the substance stored in the wells.

Optionally, the vertical transmission equipment **1** may be cooperated with a feeding mechanism **85** and a substance feeder **86.** The feeding mechanism **85** may be disposed on the base **10** or disposed on an external structure so as to be located adjacent to the base **10.** The substance feeder **86** is connected to and movable by the feeding mechanism **85.** The substance feeder **86** may be moved horizontally by being driven by the feeding mechanism **85.** As such, when the carrier **30** moves the well plate **81** along the transmission path **MP** to a side of the base **10** that corresponds to the feeding mechanism **85,** the feeding mechanism **85** can move the substance feeder **86** to above the well plate **81** so that the substance feeder **86** can add required substance into the selected wells.

It is noted that the vertical transmission equipment **1** may use the carrier **30** to move the well plate **81** to another selected area of the base **10** for performing another process, but the disclosure is not limited thereto.

The vertical transmission equipment **1** may further include a power source **87,** a plurality of transmission gears **12,** and a transmission component **50.** The transmission gears **12** are pivotally disposed on the mount surface **11** of the base **10** and are arranged adjacent to the rail structure **20.** The power source **87** may be any suitable motor. The power source **87** may be disposed on the base **10** and connected to one of the transmission gears **12,** thus the power source **87** is able to rotate the transmission gear **12** relative to the base **10.** The transmission component **50** may be any suitable gear chain capable of meshing with the transmission gears **12.** The transmission component **50** may be arranged along the rail structure **20** (or, along the transmission path **MP**) and is movably disposed on the base **10** via the transmission gears **12.** As such, the transmission gear **12** that is connected to the power source **87** can simultaneously cause the other transmission gears **12** to rotate via the transmission component **50** when being driven by the power source **87.**

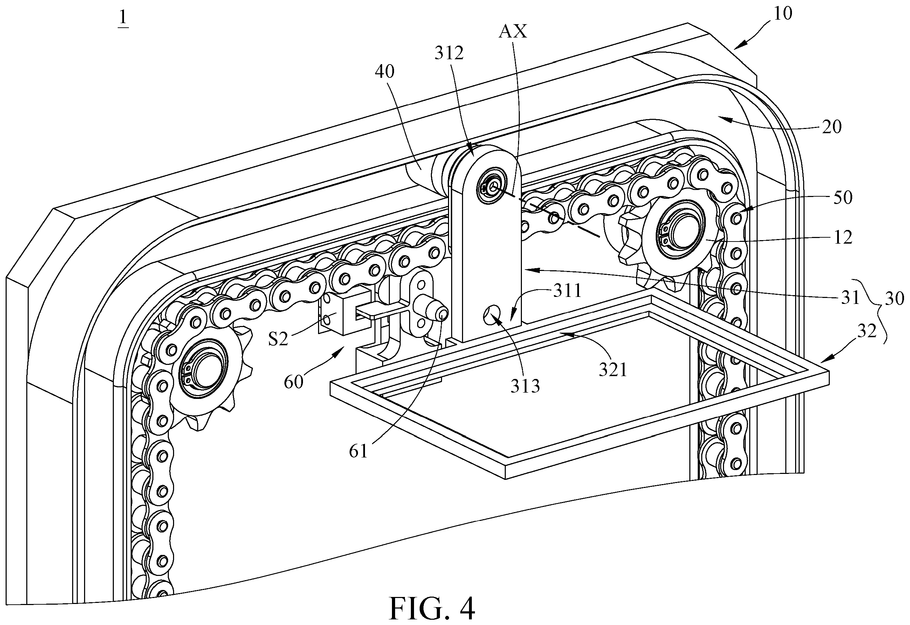

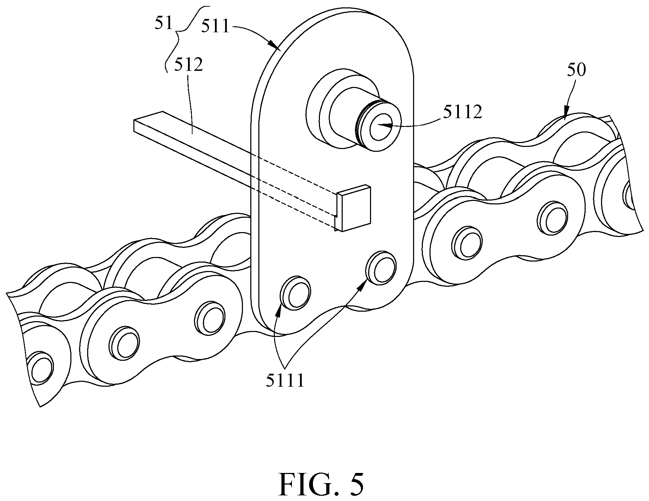

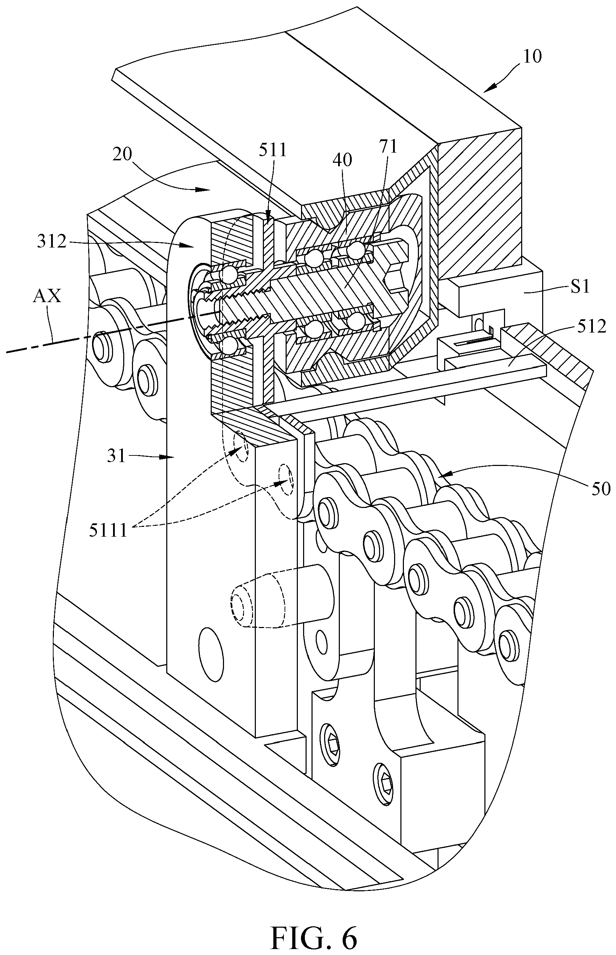

Please refer to the aforementioned figures and further refer to FIGS. 4-7, where FIG. 4 is a partially-enlarged view of the vertical transmission equipment **1,** FIG. 5 is a partially enlarged view of the transmission component **50,** and FIGS. 6-7 are partially-enlarged cross-sectional views of the vertical transmission equipment **1** taken from different view angles.

In this embodiment, the vertical transmission equipment **1** may further include a shaft **71.** The shaft **71** is disposed through the roller member **40.** The transmission component **50** may include a plurality of outer plates. The shaft **71** may be inserted into one of the outer plates of the transmission component **50** (e.g., an outer plate **51**). As shown, the outer plate **51** may include a plate portion **511.** The plate portion **511** may include a shaft hole **5112** and a mount portion **5111.** The shaft **71** is disposed through the shaft hole **5112.** The outer plate **51** is fixed to other parts of the transmission component **50** (not numbered, such as inner plate and rollers) via its mount portion **5111.**

The carrier **30** may include a bridging structure **31** and a supporting structure **32.** The supporting structure **32** means the part of the carrier **30** used to support the well plate **81.** The supporting structure **32** may include the supporting surface **321.** The bridging structure **31** may be pivotally disposed on the shaft **71** and connects the supporting structure **32,** thus, the supporting structure **32** is connected to the shaft **71** via the bridging structure **31** and the bridging structure **31** is pivotally connected to the roller member **40** via the shaft **71.** The bridging structure **31** may include a connecting portion **311** and a distal portion **312** which are located opposite to each other. The connecting portion **311** means the portion of the bridging structure **31** in which the supporting structure **32** is connected to the bridging structure **31,** and the distal portion **312** means the portion of the bridging structure **31** that is pivotally sleeved on the shaft **71.**

At least part of the outer plate **51** of the transmission component **50** may be pivotally connected to and located between the bridging structure **31** of the carrier **30** and the roller member **40,** thus, the carrier **30** and the roller member **40** are both rotatable relative to the outer plate **51.** When the power source **87** causes the transmission component **50** to move by driving the transmission gear **12** connected thereto, the power source **87** is able to move the shaft **71** which penetrates through the carrier **30** and the roller member **40** via the outer plate **51** of the transmission component **50** thereby causing the shaft **71,** the carrier **30** and the roller member **40** to move along the transmission path **MP.**

It is noted that the vertical transmission equipment **1** may selectively position the carrier **30** in the selected area of the base **10** that is favorable for keeping the carrier **30** in horizontal position. For example, the vertical transmission equipment **1** may selectively move the carrier **30** to a specific position that the supporting surface **321** of the carrier **30** and the well plate **81** on the carrier **30** can kept in horizontal due to gravitational force.

Specifically, the vertical transmission equipment **1** may further include a positioning assembly **60** and a first sensor **S1,** and the transmission component **50** may further include a protrusion structure **512** protruding from the plate portion **511.** The positioning assembly **60** may be disposed on the base **10.** The positioning assembly **60** may include a power source **88** and a positioning structure **61.** The power source **88** may be any suitable motor. The power source **88** may be disposed on the base **10.** The positioning structure **61** may be connected to the power source **88** and is movably disposed on the base **10** via the power source **88.** Specifically, the power source **88** is able to move the positioning structure **61** back and forth along a direction parallel to the axis **AX.** Corresponding to the positioning structure **61,** the bridging structure **31** of the carrier **30** may further include a positioning hole **313.** The positioning hole **313** may be located between the connecting portion **311** and the distal portion **312** of the bridging structure **31.** For example, the positioning hole **313** and the axis **AX** may be respectively located adjacent to two opposite ends of the bridging structure **31.** The first sensor **S1** may be disposed on the base **10.** For example, the first sensor **S1** may be disposed on or adjacent to the path that the protrusion structure **512** travels. When the first sensor **S1** senses the protrusion structure **512,** the carrier **30** is determined to be in the predetermined position. At that moment, the power source **88** is able to move the positioning structure **61** of the positioning assembly **60** into the positioning hole **313** of the carrier **30** so as to prevent the carrier **30** from rotating relative to the base **10.**

Optionally, the positioning assembly **60** may further include a second sensor **S2.** The second sensor **S2** may be disposed on the base **10.** For example, the second sensor **S2** may be disposed on or adjacent to the path that the positioning structure **61** of the positioning assembly **60** travels. When the second sensor **S2** senses the positioning structure **61,** it is determined that the power source **88** already causes the positioning structure **61** to move out of the positioning hole **313** of the carrier **30** and thereby preventing the positioning structure **61** from interfering the later movement of the carrier **30.**

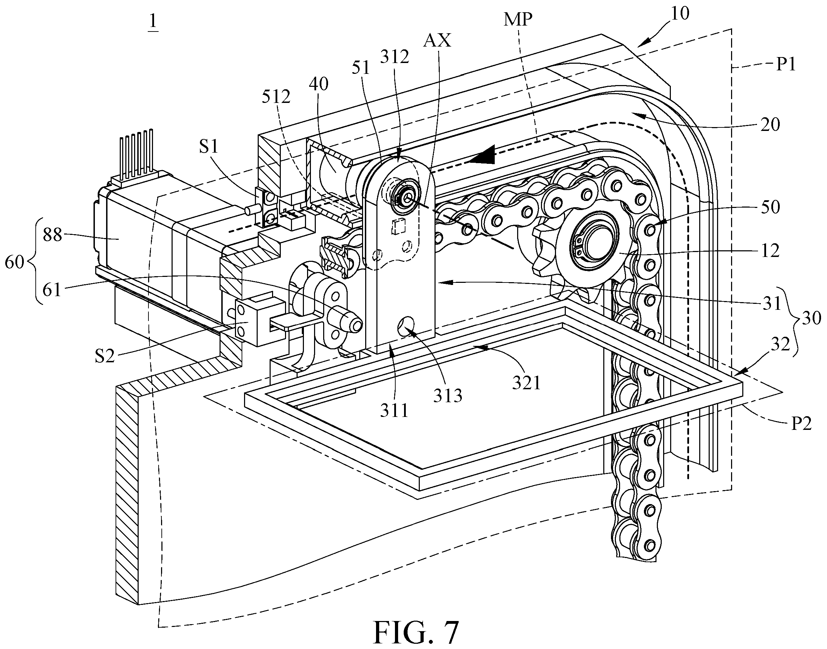

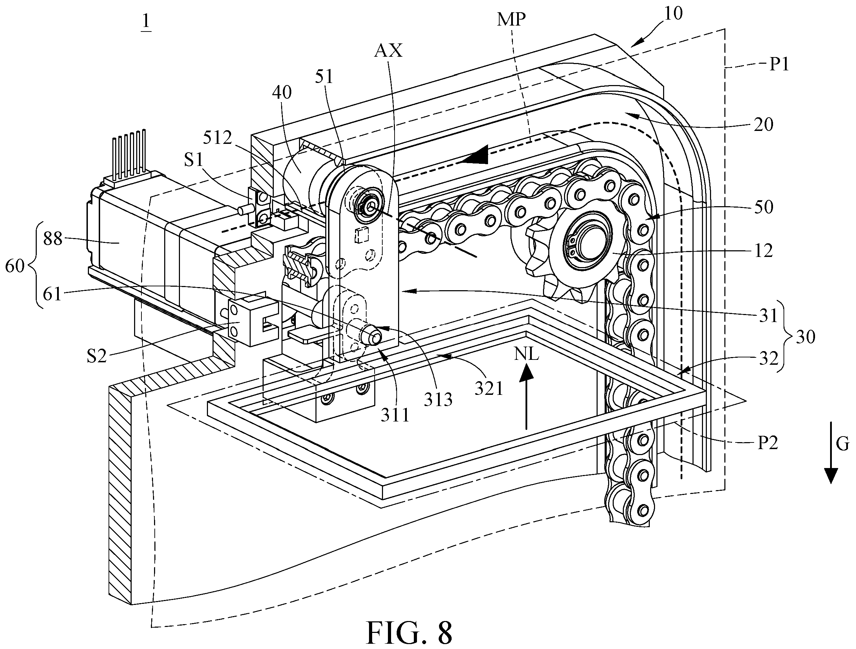

Then, please refer to FIG. 7 and further refer to FIG. 8, where FIG. 8 depicts that the carrier **30** is positioned by the positioning assembly **60.** In FIG. 7, the transmission component **50** can move the carrier **30** and the roller member **40** along the transmission path **MP** to the position in FIG. 8 by its outer plate **51** and shaft **71.** Then, in FIG. 8, when the first sensor **S1** senses the protrusion structure **512** of the outer plate **51** (in other words, when the protrusion structure **512** moves to the area can be sensed by the first sensor **S1**), meaning that the carrier **30** reaches the predetermined position. Then or meanwhile, the power source **87** stops driving the transmission component **50,** and the power source **88** moves the positioning structure **61** of the positioning assembly **60** into the positioning hole **313** on the bridging structure **31** of the carrier **30.** That is, when the positioning structure **61** is inserted into the positioning hole **313,** the carrier **30** is positioned. As such, the positioning assembly **60** can secure the part of the bridging structure **31** which is located away from the axis **AX** using the positioning structure **61** so as to secure the angle and position of the carrier **30.** In other words, the positioning structure **61** of the positioning assembly **60** is selectively inserted into the positioning hole **313** which is located away from the axis **AX.** At that moment, the normal line **NL** of the imaginary plane **P2** in which the supporting surface **321** of the carrier **30** is located is parallel to the direction of gravity **G.** As a result, the positioning assembly **60** secures the supporting surface **321** of the carrier **30** in horizontal status.

Then, when the carrier **30** is needed to be moved to the next stop along the transmission path **MP,** the power source **88** withdraws the positioning structure **61** of the positioning assembly **60** from the positioning hole **313** of the carrier **30.** When the second sensor **S2** senses the positioning structure **61,** it is determined that the positioning structure **61** is moved to a position that does not interfere the movement of the carrier **30.** By doing so, the power source **87** then can drive the transmission component **50** again to move the carrier **30** and the roller member **40** along the transmission path **MP.**

It is noted that the previous vertical transmission equipment is one of exemplary embodiments of the disclosure but is not intended to limit the disclosure. It is also noted that the vertical transmission equipment can be modified as required. The following provides vertical transmission equipments of other embodiments which are capable of achieving the effect the same as shown in, for example, FIG. 8, but for the purpose of simplicity, only the main differences between the introduced embodiment and the previous embodiments will be described in detail, and the same or similar parts can be comprehended with reference to the corresponding paragraphs and thus will not be repeatedly described hereinafter. It is also noted that the same reference number denote the same component or element.

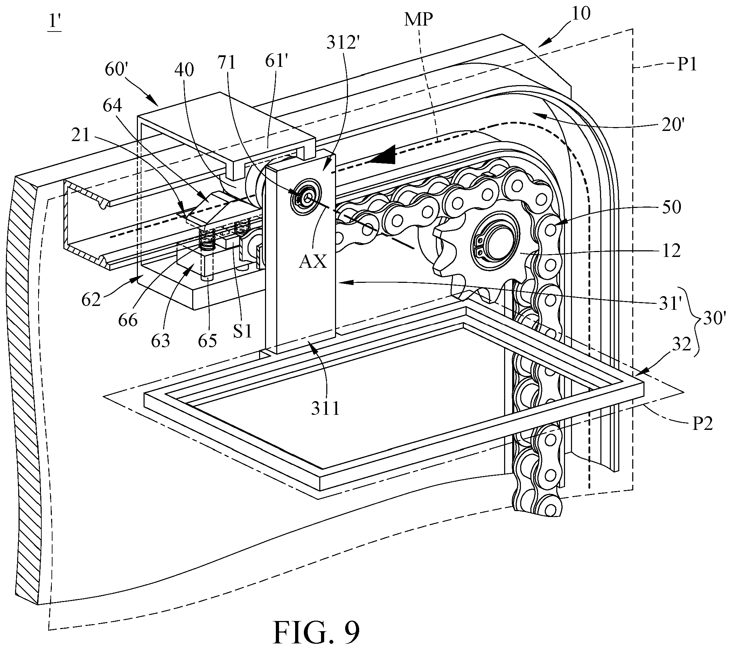

For example, please refer to FIG. 9, another embodiment of the disclosure provides a vertical transmission equipment **1'** whose positioning assembly **60'** is the main difference from the previous embodiment. Specifically, the positioning assembly **60'** may include a positioning structure **61',** a spanning portion **62,** a fixed portion **63,** a pushable component **64,** at least one guiding rod **65,** and at least one elastic component **66.** Correspondingly, the rail structure **20'** may include a through hole **21.**

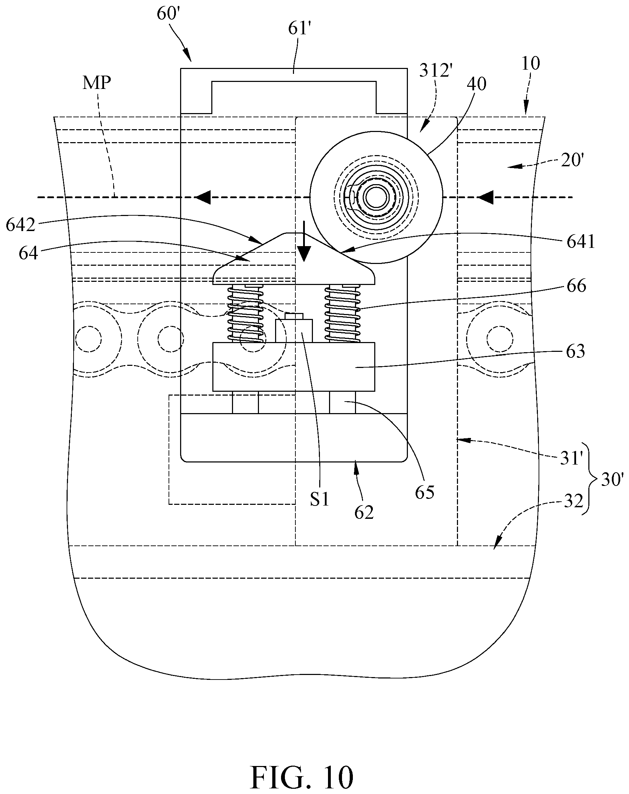

The fixed portion **63** may be fixed to the base **10.** The guiding rod **65** is disposed through the fixed portion **63.** The pushable component **64** and one end of the spanning portion **62** are respectively connected to two opposite ends of the guiding rod **65.** The pushable component **64** may be movably located at a through hole **21** of the rail structure **20'.** The first sensor **S1** may be disposed on the fixed portion **63.** Specifically, the first sensor **S1** may be located at a side (or, surface) of the fixed portion **63** which faces toward the pushable component **64.** The elastic component **66** may be any suitable compression spring. The elastic component **66** may be sleeved on the guiding rod **65** and sandwiched between the pushable component **64** and the fixed portion **63** (or, two opposite ends of the elastic component **66** are respectively in contact with the pushable component **64** and the fixed portion **63**), such that the elastic component **66** is able to force the pushable component **64** to move away from the fixed portion **63** and thereby causing at least part of the pushable component **64** to penetrate through the through hole **21** and into the rail structure **20'.** Please refer to FIG. 10, specifically, the pushable component **64** may include an abutting inclined surface **641** and a releasing inclined surface **642** which are respectively located at two opposite sides thereof and are both inclined relative to the transmission path **MP.** Due to the elastic component **66,** the abutting inclined surface **641** and the releasing inclined surface **642** may be kept in the rail structure **20** and therefore are kept in the path that the roller member **40** travels. The abutting inclined surface **641** means the slope or slanted surface of the pushable component **64** that is configured for receiving the push from the roller member **40.** The releasing inclined surface **642** means another slope or slanted surface of the pushable component **64** that is inclined relative to the abutting inclined surface **641.** The positioning structure **61'** is connected to one end of the spanning portion **62,** and the guiding rod **65** stands at the opposing end of the spanning portion **62.** The positioning structure **61'** may have a shape extending downward from a distal end of the spanning portion **62.**

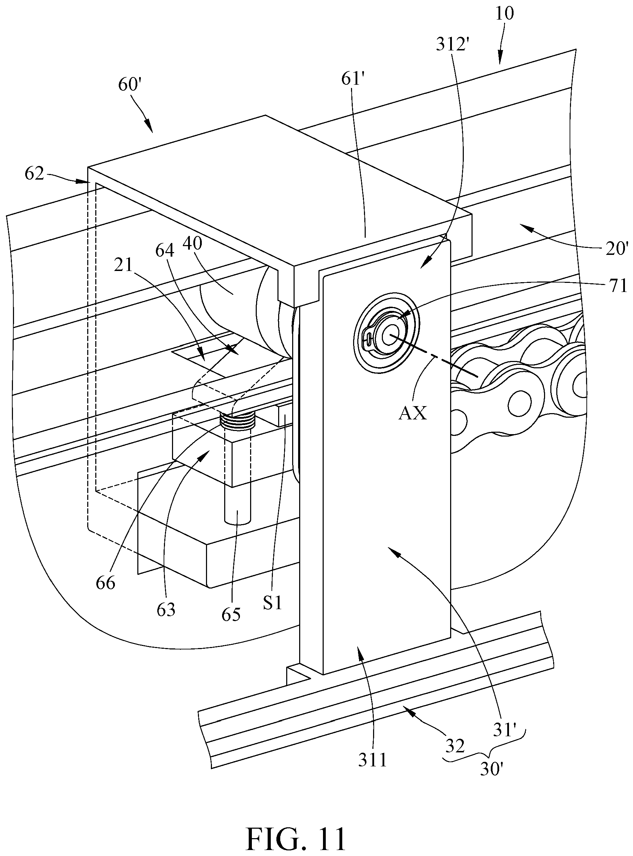

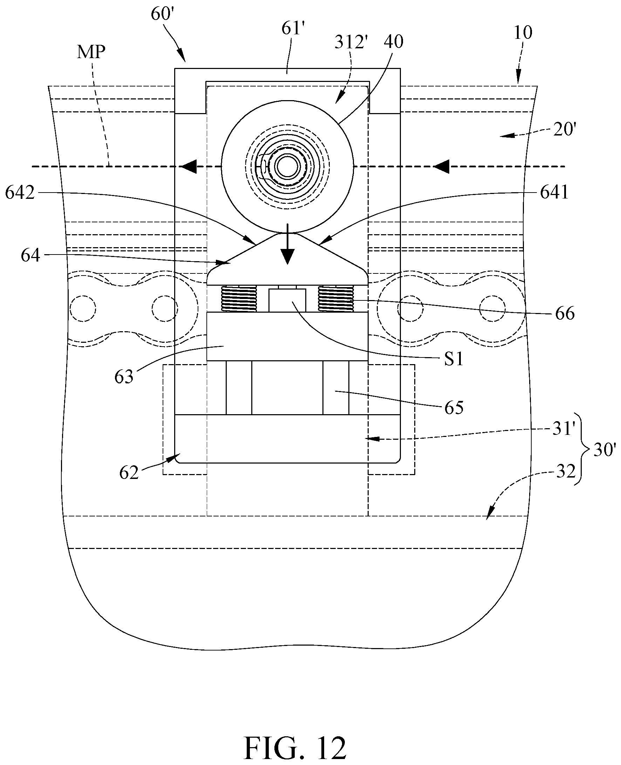

Then, please refer to FIGS. 9-10 and further refer to FIGS. 11-12. Firstly, FIGS. 9-10 show that the carrier **30'** moves along the transmission path **MP** to a position of just contacting the abutting inclined surface **641** of the positioning assembly **60'** which is kept in the rail structure **20'** by the elastic component **66.** The motion of the roller member **40** in the transmission path **MP** can apply force to push the abutting inclined surface **641** so as to force the pushable component **64** to move out of the rail structure **20'.** In specific, the pushable component **64** is selectively removed out of the through hole **21** of the rail structure **20'** by being pushed by the roller member **40.**

During the movement of the roller member **40** that pushes the pushable component **64** out of the through hole **21** of the rail structure **20',** the pushable component **64** moves the positioning structure **61'** in the same direction through the guiding rod **65** and the spanning portion **62.** Then, as shown in FIG. 11-12, a distal portion **312'** of the bridging structure **31'** of the carrier **30'** and the positioning structure **61'** are moved to engage with each other. As a result, the carrier **30'** is captured by the positioning assembly **60'** so that the angle and position of the carrier **30'** are secured. Meanwhile, the movement of the pushable component **64** driven by the roller member **40** can activate the first sensor **S1** so that the transmission component **50'** is stopped moving the carrier **30'** accordingly. It is noted that the first sensor **S1** may correspond to the pushable component **64** and therefore the outer plate **51'** of the transmission component **50'** in this embodiment may omit the aforementioned protrusion structure **512.**

After a predetermined period of time, the transmission component **50** may be activated again to move the carrier **30'** and the roller member **40** along the transmission path **MP,** such that the roller member **40** can move onto the releasing inclined surface **642** of the pushable component **64.** During such a movement of the roller member **40,** the pushable component **64** gradually enters into the rail structure **20'** by being forced by the elastic component **66,** and the positioning structure **61'** may be simultaneously moved in the same direction via the guiding rod **65** and the spanning portion **62,** such that the positioning structure **61'** releases the bridging structure **31'** of the carrier **30',** thereby allowing the roller member **40** and the carrier **30'** to keep moving along the transmission path **MP.**

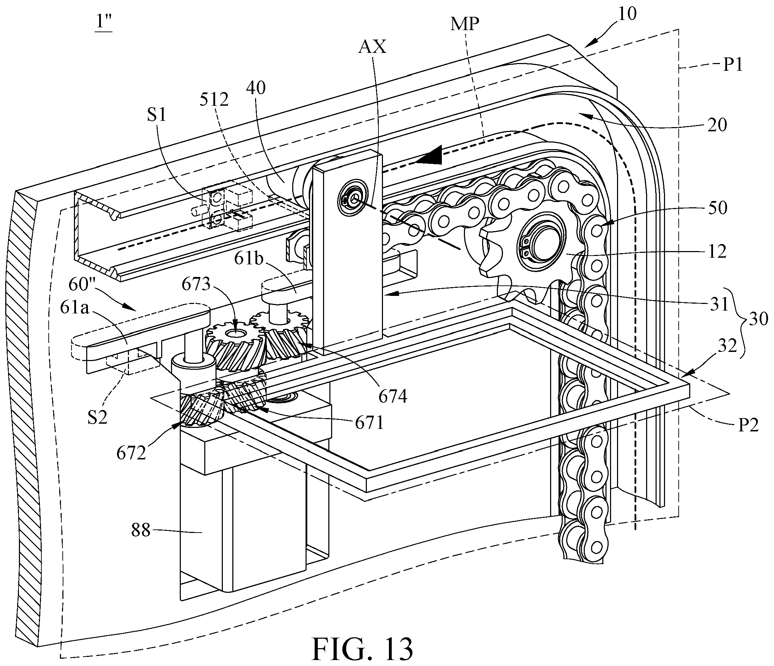

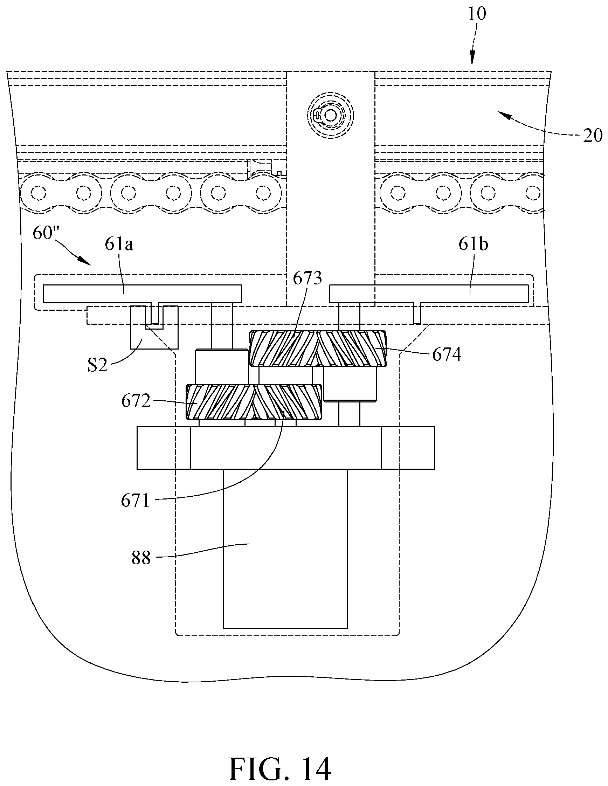

Please refer to FIGS. 13-15, another embodiment of the disclosure provides a vertical transmission equipment **1**'' whose positioning assembly **60**" is the main difference from the previous embodiments. Specifically, the positioning assembly **60**" may include a first positioning structure **61a,** a second positioning structure **61b,** a first driving gear **671,** a first driven gear **672,** a second driving gear **673,** and a second driven gear **674,** where the first driving gear **671,** the first driven gear **672,** the second driving gear **673,** and the second driven gear **674** may be any suitable helical gear whose teeth are cut at an angle to the axis.

The first driving gear **671** may be connected to the power source **88** and is movably disposed on the base **10** via the power source **88.** Specifically, the power source **88** is able to rotate the first driving gear **671** about a direction perpendicular to the axis **AX,** the first driven gear **672** is meshed with the first driving gear **671,** the first positioning structure **61a** is fixed to the first driven gear **672** and therefore is movably connected to the first driving gear **671** via the first driven gear **672.**

The second driving gear **673** may be connected to the power source **88** and is movably disposed on the base **10** via the power source **88.** Specifically, the second driving gear **673** and the first driving gear **671** may be coaxially disposed on the shaft of the power source **88,** thus the power source **88** is able to rotate the second driving gear **673** about the direction perpendicular to the axis **AX.** As shown, the first driving gear **671** and the second driving gear **673** may have opposite helices. In this embodiment, the first driving gear **671** and the second driving gear **673** may be two independent gears, but the disclosure is not limited thereto; for example, in other embodiments, the first driving gear **671** and the second driving gear **673** may be integrally formed with each other. The second driven gear **674** is meshed with the second driving gear **673,** the second positioning structure **61b** is fixed to the second driven gear **674** and therefore is movably connected to the second driving gear **673** via the second driven gear **674.**

As such, when the power source **88** rotates the first driving gear **671** and the second driving gear **673,** the first driving gear **671** and the second driving gear **673** are able to rotate the first positioning structure **61a** and the second positioning structure **61b** in opposite directions by rotating the first driven gear **672** and the second driven gear **674.**

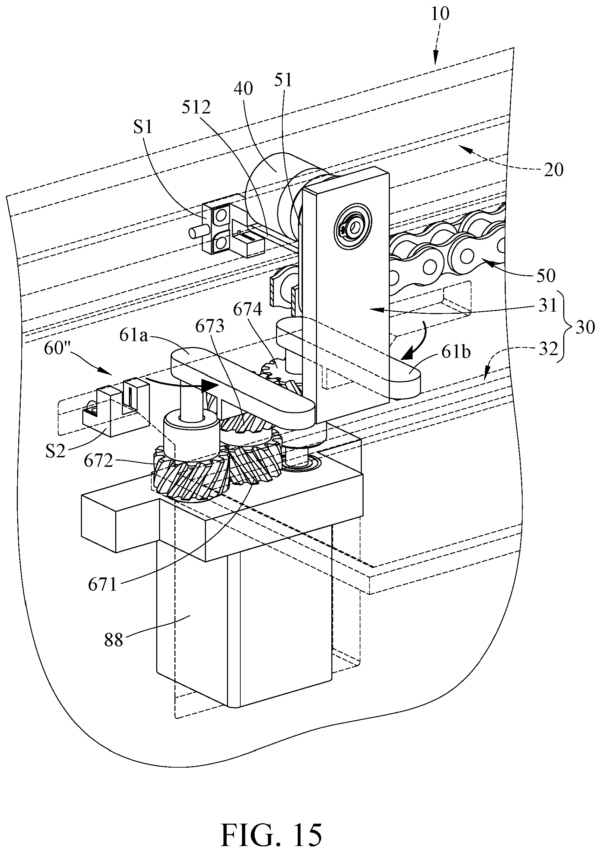

For example, as shown in FIG. 15, when the first sensor **S1** senses the protrusion structure **512** of the outer plate **51** (meaning that the carrier **30** reaches the predetermined positon), the power source **88** can accordingly cause the first positioning structure **61a** and the second positioning structure **61b** to rotate in opposite directions (as indicated by the arrows) via the first driving gear **671** and the first driven gear **672** and the second driving gear **673** and the second driven gear **674,** such that the first positioning structure **61a** and the second positioning structure **61b** will contact or appear at two opposite sides of the bridging structure **31** of the carrier **30.** At that moment, the part of the carrier **31** which is located relatively away from the axis **AX** can be clamped or held by the first positioning structure **61a** and the second positioning structure **61b** (or, sandwiched between the first positioning structure **61**a and the second positioning structure **61b**), so that the angle and position of the carrier **30** are secured.

After a predetermined period of time, the power source **88** may reversely rotate the first driving gear **671** and the second driving gear **673** to move the first positioning structure **61**a and the second positioning structure **61b** away from the carrier **30.** When the second sensor **S2** senses one of the positioning structures (e.g., the first positioning structure **61a**), it is determined that the first positioning structure **61a** and the second positioning structure **61b** are at a position that does not interfere with the movement of the carrier **30,** thereby allowing the transmission component **50** to keep moving the roller member **40** and the carrier **30** along the transmission path **MP.**

It is noted that the vertical transmission equipments in some other embodiments may omit the aforementioned second positioning structure, second driving gear, and second driven gear and only remain the first driving gear, the first driven gear, and the first positioning structure to stop at one side of the carrier.

According to the vertical transmission equipments as discussed in the above embodiments of the disclosure, the supporting surface of the carrier is perpendicular to the mount surface of the base, the supporting surface does not overlap with the rail structure in the normal line of the supporting surface, or the supporting surface of the carrier is perpendicular to the imaginary plane which is defined by the transmission path of the carrier, thus, the supporting surface of the carrier is movably kept in an angle perpendicular to the base and the rail structure. In other words, the vertical transmission equipment achieves a well plate carrier capable of movable in vertical manner, which makes the vertical transmission equipment take lesser horizontal space and therefore is favorable for increasing the number of equipments in a laboratory constrained by limited space.

It will be apparent to those skilled in the art that various modifications and variations can be made to the present disclosure. It is intended that the specification and examples be considered as exemplary embodiments only, with a scope of the disclosure being indicated by the following claims.

## Claims

1. A vertical transmission equipment (1), comprising:
a base (10); and
a carrier (30) comprising a supporting surface (321) and a well plate (81) being supported by the supporting surface and movably disposed on the base along a transmission path (MP);
wherein the supporting surface of the carrier is perpendicular to an imaginary plane (P1) which is defined by the transmission path of the carrier;
wherein the vertical transmission equipment further comprises a roller member (40) movably disposed on the base, the carrier comprises a bridging structure (31) and a supporting structure (32), the bridging structure is pivotally connected to the roller member and is connected to the supporting structure, and the supporting surface is located on the supporting structure;
**characterized in that**
the vertical transmission equipment further comprises a positioning assembly (60) disposed on the base, the positioning assembly comprises a positioning structure (61), the bridging structure of the carrier has a positioning hole (313), the positioning structure of the positioning assembly is selectively inserted into the positioning hole, and when the positioning assembly is inserted into the positioning hole, the carrier is positioned.

2. The vertical transmission equipment according to claim 1, the bridging structure of the carrier is pivotally connected to the roller member about an axis (AX), and the positioning hole and the axis are respectively located adjacent to two opposite ends of the bridging structure.

3. The vertical transmission equipment according to claim 1, further comprising a first sensor (S1) and a transmission component (50), wherein the first sensor is disposed on the base, the transmission component is movably disposed on the base, the transmission component comprises a plate portion (511) and a protrusion structure (512) protruding from the plate portion, a part of the plate portion is pivotally connected between the roller member and the bridging structure of the carrier, when the protrusion structure is sensed by the first sensor, the positioning structure is inserted into the positioning hole, and the carrier is positioned.

4. The vertical transmission equipment according to claim 1, wherein the positioning assembly further comprises a second sensor (S2) disposed on the base, the second sensor is configured to determine whether the positioning structure is moved out of the positioning hole by sensing the positioning structure.

5. A vertical transmission equipment (1') comprising;
a base (10); and
a carrier (30') comprising a supporting surface (321) and a well plate (81) being supported by the supporting surface and movably disposed on the base along a transmission path (MP);
wherein the supporting surface of the carrier is perpendicular to an imaginary plane (P1) which is defined by the transmission path of the carrier;
wherein the vertical transmission equipment further comprises a roller member (40) movably disposed on the base, the carrier comprises a bridging structure (31) and a supporting structure (32), the bridging structure is pivotally connected to the roller member and is connected to the supporting structure, and the supporting surface is located on the supporting structure;
**characterized in that**
the vertical transmission equipment further comprises a positioning assembly (60'), wherein the positioning assembly comprises a positioning structure (61'), a pushable component (64), a spanning portion (62), a fixed portion (63), a guiding rod (65), and an elastic component (66), the fixed portion is disposed on the base, the guiding rod is disposed through the fixed portion, the pushable component and the spanning portion are respectively connected to two opposite ends of the guiding rod, the base comprises a through hole (21), the pushable component is movably located at the through hole and is partially located in the base, the elastic component is sleeved on the guiding rod and sandwiched between the pushable component and the fixed portion, the positioning structure is connected to the spanning portion, and the pushable component is selectively removed out of the through hole by the roller member to cause the positioning structure to engage with the bridging structure of the carrier.

6. The vertical transmission equipment according to claim 5, further comprising a first sensor (S1) disposed on a side of the fixed portion of the positioning assembly which faces towards the pushable component, wherein the first sensor is activated when the pushable component is pushed by the roller member.

7. The vertical transmission equipment according to claim 5, wherein the pushable component comprises an abutting inclined surface (641) and a releasing inclined surface (642) which are located opposite to each other, and the releasing inclined surface and the abutting inclined surface are selectively located in the base and are selectively contacted the roller member.

8. A vertical transmission equipment (1'') comprising;
a base (10); and
a carrier (30') comprising a supporting surface (321) and a well plate (81) being supported by the supporting surface and movably disposed on the base along a transmission path (MP);
wherein the supporting surface of the carrier is perpendicular to an imaginary plane (P1) which is defined by the transmission path of the carrier;
**characterized in that**
the vertical transmission equipment further comprises a positioning assembly (60''), wherein the positioning assembly comprises a first driving gear (671), a first driven gear (672), and a first positioning structure (61a), the first driving gear is pivotally disposed on the base, and the first positioning structure is movably by the first driving gear via the first driven gear and is selectively stopped at a side of the carrier when being driven by the first driving gear.

9. The vertical transmission equipment according to claim 8, wherein the positioning assembly comprises a second driving gear (673), a second driven gear (674), and a second positioning structure (61b), the second positioning structure is movable by the second driving gear via the second driven gear, and the second positioning structure is selectively stopped at another side of the carrier when being driven by the second driving gear.

10. The vertical transmission equipment according to claim 8, wherein the positioning assembly further comprises a second sensor (S2) disposed on the base, the second sensor is configured to determine whether the first positioning structure is moved away from the side of the carrier by sensing the first positioning structure.

11. The vertical transmission equipment according to claim 8 , further comprising a rail structure (20), a roller member (40), and a transmission component (50), wherein the rail structure is disposed on the base, the roller member is movably disposed on the rail structure, the transmission component is movably disposed on the base and arranged along the rail structure, the carrier comprises a bridging structure (31) and a supporting structure (32), the bridging structure is pivotally connected to the roller member and is connected to the supporting structure, the supporting surface is located on the supporting structure, the transmission component comprises a plate portion (511), a part of the plate portion is pivotally connected between the roller member and the bridging structure of the carrier, and the positioning assembly is configured to position the carrier relative to the rail structure.

12. The vertical transmission equipment according to any one of claims 1 and 5, further comprising a rail structure (20, 20'), and a transmission component (50), wherein the rail structure is disposed on the base, the roller member is movably disposed on the rail structure, the transmission component is movably disposed on the base and arranged along the rail structure, the transmission component comprises a plate portion (511), a part of the plate portion is pivotally connected between the roller member and the bridging structure of the carrier, and the positioning assembly is configured to position the carrier relative to the rail structure.

## Patentansprüche

1. Vertikalübertragungseinrichtung (1) mit:
einer Basis (10); und
einem Träger (30) mit einer Stützfläche (321) und einer Well-Platte (81), welche von der Stützfläche gestützt ist und entlang eines Übertragungswegs (MP) bewegbar auf der Basis angeordnet ist;
wobei die Stützfläche des Trägers zu einer imaginären Ebene (PI) senkrecht verläuft, welche durch den Übertragungsweg des Trägers definiert ist,
wobei die Vertikalübertragungseinrichtung ferner ein bewegbar an der Basis angeordnetes Rollenelement (40) aufweist, der Träger eine Brückenstruktur (31) und eine Stützstruktur (32) aufweist, die Brückenstruktur schwenkbar mit dem Rollenelement verbunden ist und mit der Stützstruktur verbunden ist, und die Stützfläche auf der Stützstruktur angeordnet ist,
**dadurch gekennzeichnet,**
**dass** die Vertikalübertragungseinrichtung ferner eine auf der Basis angeordnete Positionierungsanordnung (60) aufweist, die Positionierungsanordnung eine Positionierungsstruktur (61) aufweist, die Brückenstruktur des Trägers ein Positionierungsloch (313) aufweist, die Positionierungsstrukturen der Positionierungsanordnung selektiv in das Positionierungsloch eingeführt wird, und wenn die Positionierungsanordnung in das Positionierungsloch eingeführt ist, der Träger positioniert ist.

2. Vertikalübertragungseinrichtung nach Anspruch 1, bei welcher die Brückenstruktur des Trägers um eine Achse (AX) schwenkbar mit dem Rollenelement verbunden ist, und das Positionierungsloch und die Achse jeweils zwei entgegengesetzten Enden der Brückenstruktur benachbart angeordnet sind.

3. Vertikalübertragungseinrichtung nach Anspruch 1, ferner mit einem ersten Sensor (S1) und einer Übertragungskomponente (50), wobei der erste Sensor an der Basis angeordnet ist, die Übertragungskomponente bewegbar an der Basis angeordnet ist, die Übertragungskomponente einen Plattenbereich (511) und eine Vorsprungsstruktur (512) aufweist, welche von dem Plattenbereich absteht, ein Teil des Plattenbereichs schwenkbar zwischen dem Rollenelement und der Brückenstruktur des Trägers verbunden ist, und wenn die Vorsprungsstruktur durch den ersten Sensor erfasst wird, die Positionierungsstruktur in das Positionierungsloch eingeführt wird und der Träger positioniert wird.

4. Vertikalübertragungseinrichtung nach Anspruch 1, bei welcher die Positionierungsanordnung ferner einen zweiten Sensor (S2) aufweist, der an der Basis angeordnet ist, wobei der zweite Sensor dazu ausgebildet ist, durch Erfassen der Positionierungsstruktur festzustellen, ob die Positionierungsstruktur aus dem Positionierungsloch bewegt wird.

5. Vertikalübertragungseinrichtung (1') mit:
einer Basis (10); und
einem Träger (30') mit einer Stützfläche (321) und einer Well-Platte (81), welche von der Stützfläche gestützt ist und entlang eines Übertragungswegs (MP) bewegbar auf der Basis angeordnet ist;
wobei die Stützfläche des Trägers zu einer imaginären Ebene (PI) senkrecht verläuft, welche durch den Übertragungsweg des Trägers definiert ist,
wobei die Vertikalübertragungseinrichtung ferner ein bewegbar an der Basis angeordnetes Rollenelement (40) aufweist, der Träger eine Brückenstruktur (31) und eine Stützstruktur (32) aufweist, die Brückenstruktur schwenkbar mit dem Rollenelement verbunden ist und mit der Stützstruktur verbunden ist, und die Stützfläche auf der Stützstruktur angeordnet ist,
**dadurch gekennzeichnet,**
**dass** die Vertikalübertragungseinrichtung ferner aufweist: eine auf der Basis angeordnete Positionierungsanordnung (60'), eine drückbare Komponente (64), eine Spannfläche (62), einen festen Bereich (63), eine Führungsstange (65) und eine elastische Komponente (66), wobei der feste Bereich an der Basis angeordnet ist, die Führungsstange durch den festen Bereich hindurch angeordnet ist, die drückbare Komponente und der Spannbereich jeweils mit zwei entgegengesetzten Enden der Führungsstange verbunden sind, die Basis ein Durchgangsloch (21) aufweist, die drückbare Komponente bewegbar an dem Durchgangsloch angeordnet ist und teilweise in der Basis angeordnet ist, die elastische Komponente auf die Führungsstange gesetzt ist und sandwichartige zwischen der drückbaren Komponente und dem festen Bereich angeordnet ist, die Positionierungsstruktur mit dem Spannbereich verbunden ist, und die drückbare Komponente durch das Rollenelement selektiv aus dem Durchgangsloch bewegt wird, um das Zusammengreifen der Positionierungsstruktur mit der Brückenstruktur des Trägers zu bewirken.

6. Vertikalübertragungseinrichtung nach Anspruch 5, ferner mit einem ersten Sensor (S1), der an einer der drückbaren Komponente zugewandten Seite des festen Bereichs der Positionierungsanordnung angeordnet ist, wobei der erste Sensor aktiviert wird, wenn die drückbare Komponente durch das Rollenelement gedrückt wird.

7. Vertikalübertragungseinrichtung nach Anspruch 5, bei welcher die drückbare Komponente schräge Anlagefläche (641) und eine schräge Freigabefläche (642) aufweist, die einander entgegengesetzt angeordnet sind, und die schräge Freigabefläche und die schräge Anlagefläche selektiv in der Basis angeordnet sind und selektiv von dem Rollenelement berührt werden.

8. Vertikalübertragungseinrichtung (1") mit:
einer Basis (10); und
einem Träger (30') mit einer Stützfläche (321) und einer Well-Platte (81), welche von der Stützfläche gestützt ist und entlang eines Übertragungswegs (MP) bewegbar auf der Basis angeordnet ist;
wobei die Stützfläche des Trägers zu einer imaginären Ebene (PI) senkrecht verläuft, welche durch den Übertragungsweg des Trägers definiert ist,
**dadurch gekennzeichnet,**
**dass** die Vertikalübertragungseinrichtung ferner eine Positionierungsanordnung (60") aufweist, wobei die Positionierungsanordnung ein erstes Antriebszahnrad (671), ein erstes angetriebenes Zahnrad (672) und eine erste Positionierungsstruktur (61a) aufweist, das erste Antriebszahnrad schwenkbar an der Basis angeordnet ist, und die erste Positionierungsstruktur über das erste angetriebene Zahnrad durch das erste Antriebszahnrad bewegbar ist und selektiv an einer Seite des Trägers gestoppt wird, wenn sie durch das erste Antriebszahnrad angetrieben wird.

9. Vertikalübertragungseinrichtung nach Anspruch 8, bei welcher die Positionierungsanordnung ein zweites Antriebszahnrad (673), ein zweites angetriebenes Zahnrad (674) und eine zweite Positionierungsstruktur (61b) aufweist, die zweite Positionierungsstruktur über das zweite angetriebene Zahnrad durch das zweite Antriebszahnrad bewegbar ist, und die zweite Positionierungsstruktur selektiv an einer anderen Seite des Trägers gestoppt wird, wenn sie durch das zweite Antriebszahnrad angetrieben wird.

10. Vertikalübertragungseinrichtung nach Anspruch 8, bei welcher die Positionierungsanordnung ferner einen zweiten Sensor (S2) aufweist, der an der Basis angeordnet ist, wobei der zweite Sensor dazu ausgebildet ist, durch Erfassen der ersten Positionierungsstruktur festzustellen, ob die erste Positionierungsstruktur von der Seite des Trägers wegbewegt wird.

11. Vertikalübertragungseinrichtung nach Anspruch 8, ferner mit einer Schienenstruktur (20), einem Rollenelement (40), und einer Übertragungskomponente (50), wobei die Schienenstruktur an der Basis angeordnet ist, das Rollenelement bewegbar auf der Schienenstruktur angeordnet ist, die Übertragungskomponente bewegbar an der Basis angeordnet ist und entlang der Schienenstruktur angeordnet ist, der Träger eine Brückenstruktur (30) und eine Stützstruktur (32) aufweist, die Brückenstruktur schwenkbar mit dem Rollenelement verbunden ist und mit der Stützstruktur verbunden ist, die Stützfläche an der Stützstruktur angeordnet ist, die Übertragungskomponente einen Plattenbereich (511) aufweist, ein Teil des Plattenbereichs schwenkbar zwischen dem Rollenelement und der Brückenstruktur des Trägers verbunden ist, und die Positionierungsanordnung dazu ausgebildet ist, den Träger relativ zu der Schienenstruktur zu positionieren.

12. Vertikalübertragungseinrichtung nach einem der Anspruch 1 und 5, ferner mit einer Schienenstruktur (20, 20'), und einer Übertragungskomponente (50), wobei die Schienenstruktur an der Basis angeordnet ist, das Rollenelement bewegbar auf der Schienenstruktur angeordnet ist, die Übertragungsanordnung bewegbar an der Basis angeordnet ist und entlang der Schienenstruktur angeordnet ist, die Übertragungsstruktur einen Plattenbereich (511) aufweist, ein Teil des Plattenbereichs schwenkbar zwischen dem Rollenelement und der Brückenstruktur des Trägers verbunden ist, und die Positionierungsanordnung dazu ausgebildet ist, den Träger relativ zu der Schienenstruktur zu positionieren.

## Revendications

1. Equipement de transmission verticale (1) comprenant :
une base (10) et
un support (30) comprenant une surface de support (321) et une plaque à puits (81) étant portée par la surface de support et disposée mobile sur la base le long d'un trajet de transmission (MP) ;
la surface de support du support étant perpendiculaire à un plan imaginaire (P1) qui est défini par le trajet de transmission du support ;
l'équipement de transmission verticale comprenant en outre un élément à rouleau (40) disposé mobile sur la base, le support comprenant une structure de liaison (31) et une structure de support (32), la structure de liaison étant reliée de façon pivotante à l'élément à rouleau et étant reliée à la structure de support, et la surface de support étant située sur la structure de support ;
**caractérisé en ce que**
l'équipement de transmission verticale comprend en outre un ensemble de positionnement (60) disposé sur la base, l'ensemble de positionnement comprend une structure de positionnement (61), la structure de liaison du support a un trou de positionnement (313), la structure de positionnement de l'ensemble de positionnement est insérée de façon sélective dans le trou de positionnement et, lorsque l'ensemble de positionnement est inséré dans le trou de positionnement, le support est positionné.

2. Equipement de transmission verticale selon la revendication 1, la structure de liaison du support étant reliée de façon pivotante à l'élément à rouleau autour d'un axe (AX) et le trou de positionnement et l'axe étant situés respectivement adjacent aux deux extrémités opposées de la structure de liaison.

3. Equipement de transmission verticale selon la revendication 1, comprenant en outre un premier capteur (S1) et un composant de transmission (50), le premier capteur étant disposé sur la base, le composant de transmission étant disposé mobile sur la base, le composant de transmission comprenant une partie de plaque (511) et une structure de protubérance (512) formant saillie sur la partie de plaque, une partie de la partie de plaque étant reliée de façon pivotante entre l'élément à rouleau et la structure de liaison du support, lorsque la structure de protubérance est détectée par le premier capteur, la structure de positionnement étant insérée dans le trou de positionnement et le support étant positionné.

4. Equipement de transmission verticale selon la revendication 1, l'ensemble de positionnement comprenant en outre un deuxième capteur (S2) disposé sur la base, le deuxième capteur étant configuré pour déterminer si la structure de positionnement est déplacée en dehors du trou de positionnement, en détectant la structure de positionnement.

5. Equipement de transmission verticale (1') comprenant :
une base (10') et
un support (30') comprenant une surface de support (321) et une plaque à puits (81) étant portée par la surface de support et disposée mobile sur la base le long d'un trajet de transmission (MP) ;
la surface de support du support étant perpendiculaire à un plan imaginaire (P1) qui est défini par le trajet de transmission du support ;
l'équipement de transmission verticale comprenant en outre un élément à rouleau (40) disposé mobile sur la base, le support comprenant une structure de liaison (31) et une structure de support (32), la structure de liaison étant reliée de façon pivotante à l'élément à rouleau et étant reliée à la structure de support, et la surface de support étant située sur la structure de support ;
**caractérisé en ce que**
l'équipement de transmission verticale comprend en outre un ensemble de positionnement (60'), l'ensemble de positionnement comprenant une structure de positionnement (61'), un composant (64) pouvant être poussé, une partie qui enjambe (62), une partie fixe (63), une barre de guidage (65) et un composant élastique (66), la partie fixe étant disposée sur la base, la barre de guidage étant disposée à travers la partie fixe, la partie pouvant être poussée et la partie qui enjambe étant reliées respectivement aux deux extrémités opposées de la barre de guidage, la base comprenant un trou de passage (21), le composant pouvant être poussé étant située mobile au trou de passage et étant située partiellement dans la base, le composant élastique emmanchant la barre de guidage et étant enfermé entre le composant pouvant être poussé et la partie fixe, la structure de positionnement étant reliée à la partie qui enjambe et le composant pouvant être poussé étant sélectivement enlevé du trou de passage par l'élément à rouleau pour faire la structure de positionnement s'engager avec la structure qui enjambe du support.

6. Equipement de transmission verticale selon la revendication 5, comprenant en outre un premier capteur (S1) disposé sur un côté de la partie fixe de l'ensemble de positionnement qui est orienté vers le composant pouvant être poussé, le premier capteur étant activé lorsque le composant pouvant être poussé est poussé par l'élément à rouleau.

7. Equipement de transmission verticale selon la revendication 5, l'élément pouvant être poussé comprenant une surface inclinée de butée (641) et une surface inclinée de libération (642) qui sont situées à l'opposé l'une de l'autre et la surface inclinée de libération et la surface inclinée de butée sont sélectivement situées dans la base et sont sélectivement en contact avec l'élément à rouleau.

8. Equipement de transmission verticale (1") comprenant :
une base (10) et
un support (30') comprenant une surface de support (321) et une plaque à puits (81) étant portée par la surface de support et disposée mobile sur la base le long d'un trajet de transmission (MP) ;
la surface de support du support étant perpendiculaire à un plan imaginaire (P1) qui est défini par le trajet de transmission du support ;
**caractérisé en ce que**
l'équipement de transmission verticale comprend en outre un ensemble de positionnement (60''), l'ensemble de positionnement comprenant un premier pignon entraînant (671), un premier pignon entraîné (672) et une première structure de positionnement (61a), le premier pignon entraînant étant disposé pivotant sur la base et la première structure de positionnement pouvant être mue par le premier pignon entraînant via le premier pignon entraîné et étant sélectivement arrêtée sur un côté du support lorsqu'elle est entraînée par le premier pignon entraînant.

9. Equipement de transmission verticale selon la revendication 8, l'ensemble de positionnement comprenant un deuxième pignon entraînant (673), un deuxième pignon entraîné (674) et une deuxième structure de positionnement (61b), la deuxième structure de positionnement pouvant être mue par le deuxième pignon entraînant via le deuxième pignon entraîné et la deuxième structure de positionnement étant sélectivement arrêtée sur un autre côté du support lorsqu'elle est entraînée par le deuxième pignon entraînant.

10. Equipement de transmission verticale selon la revendication 8, l'ensemble de positionnement comprenant en outre un deuxième capteur (S2) disposé sur la base, le deuxième capteur étant configuré pour déterminer si la première structure de positionnement est déplacée du premier côté du support en détectant la première structure de positionnement.

11. Equipement de transmission verticale selon la revendication 8, l'ensemble de positionnement comprenant une structure de rail (20), un élément à rouleau (40) et un composant de transmission (50), la structure de rail étant disposée sur la base, l'élément à rouleau étant disposé mobile sur la structure de rail, le composant de transmission étant disposé mobile sur la base et agencé le long de la structure de rail, le support comprenant une structure qui enjambe (31) et une structure de support (32), la structure qui enjambe étant reliée de façon pivotante à l'élément à rouleau et étant reliée à la structure de support, la surface de support étant située sur la structure de support, le composant de transmission comprenant une partie de plaque (511), une partie de la partie de plaque étant reliée de façon pivotante entre l'élément à rouleau et la structure qui enjambe du support, et l'ensemble de positionnement étant configuré pour positionner le support par rapport à la structure de rail.

12. Equipement de transmission verticale selon l'une des revendications 1 et 5, comprenant en outre une structure de rail (20, 20') et un composant de transmission (50), la structure de rail étant disposée sur la base, l'élément à rouleau étant disposé de façon mobile sur la structure de rail, le composant de transmission étant disposé de façon mobile sur la base et agencé le long de la structure de rail, le composant de transmission comprenant une partie de plaque (511), une partie de la partie de plaque étant reliée de façon pivotante entre l'élément à rouleau et la structure qui enjambe du support, et l'ensemble de positionnement étant configuré pour positionner le support par rapport à la structure de rail.
